(19) **Europäisches Patentamt**
**European Patent Office**
**Office européen des brevets**

(11) Publication number: **0 267 685 B1**

# (12) EUROPEAN PATENT SPECIFICATION

(45) Date of publication of patent specification: **06.03.91**    (51) Int. Cl.⁵: **F16C 1/22**

(21) Application number: **87308946.0**

(22) Date of filing: **09.10.87**

(54) **Control cable adjuster device.**

(30) Priority: **10.10.86 US 917914**

(43) Date of publication of application:
**18.05.88 Bulletin 88/20**

(45) Publication of the grant of the patent:
**06.03.91 Bulletin 91/10**

(84) Designated Contracting States:
**DE ES FR GB IT**

(56) References cited:
**EP-A- 0 213 857**
**EP-A- 0 234 864**
**GB-A- 2 176 861**
**US-A- 4 378 713**
**US-A- 4 598 809**

(73) Proprietor: **BABCOCK INDUSTRIES INC.**
**425 Post Road**
**Fairfield Connecticut 06430(US)**

(72) Inventor: **Jaksic, Miroslav**
**1929 Plymouth Road, No. 5026**
**Ann Arbor Michigan 48103(US)**

(74) Representative: **Lewis, David Overington**
**Babcock International plc 217 Tabard Street**
**London SE1 4UR(GB)**

## Description

This invention relates to control cable adjuster devices and, more particularly to devices insertable into control cable runs either at intermediate locations or adjacent terminations to provide tensioning of the cable run, such as in foot pedal operated cable controlled brake systems or clutches in automobiles.

In US A-4 378 713 there is disclosed a control cable adjuster device including a tubular housing having at one end a first anchorage connectable into a cable run and at the other end locating means for a termination member movably extending co-axially of the tubular housing between a position fully retracted into, and a position fully extended from, the tubular housing, first resilient means biasing the termination member toward the position fully retracted into the tubular housing, the termination member being formed on the surface thereof with circumferential serrations engageable with collet members and, on the end thereof remote from the tubular housing, a second anchorage connectable into the cable run, the collet members each having a body portion formed on radially inner faces with serrations adapted to co-act with the serrations on the termination member, an internal frusto-conical surface connected to the housing being arranged to co-act with first, external part frusto-conical, surfaces on the collet members such that relative axial movement of the collet means in a direction axially outwardly of the tubular housing urges the collet members radially inwardly and thereby urges the serrations on the collet members into engagement with the serrations on the termination member.

By the present invention, the said internal frusto- conical surface is arranged on the locating means which is attached to the tubular housing, and the body portion of each collet member has, extending axially from the body portion, an arm having an end portion located on the locating means for pivoting through a restricted are on an axis generally tangential to the locating means and for restricted axial movement relative to the locating means, with second resilient means biasing the collet members radially inwardly.

The invention will now be described, by way of example, with reference to the accompanying, partly diagrammatic, drawings, in which:-

Figure 1 is a longitudinal sectional view of a self-adjusting cable control device in an engaged configuration;

Figure 2 is a view of a portion of Figure 1 to an enlarged scale;

Figure 3 is a cross section view taken on the line III-III in Figure 1; and

Figure 4 is a view corresponding to Figure 2 but showing the device in a disengaged configuration.

Referring to the drawings, the self-adjusting cable control device is arranged to be interposed in a cable run (not shown) and comprises a connecting member in the form of a tubular housing 10 having end portions crimped into grooves on end inserts 11, 12 to hold the end inserts 11, 12 in position. A termination member rod 13 extends through an opening in the end insert 11 which serves to locate the termination member rod. The device is connected into a cable run with first and second anchorages (not shown) on the end insert 12 and on the termination member rod 13.

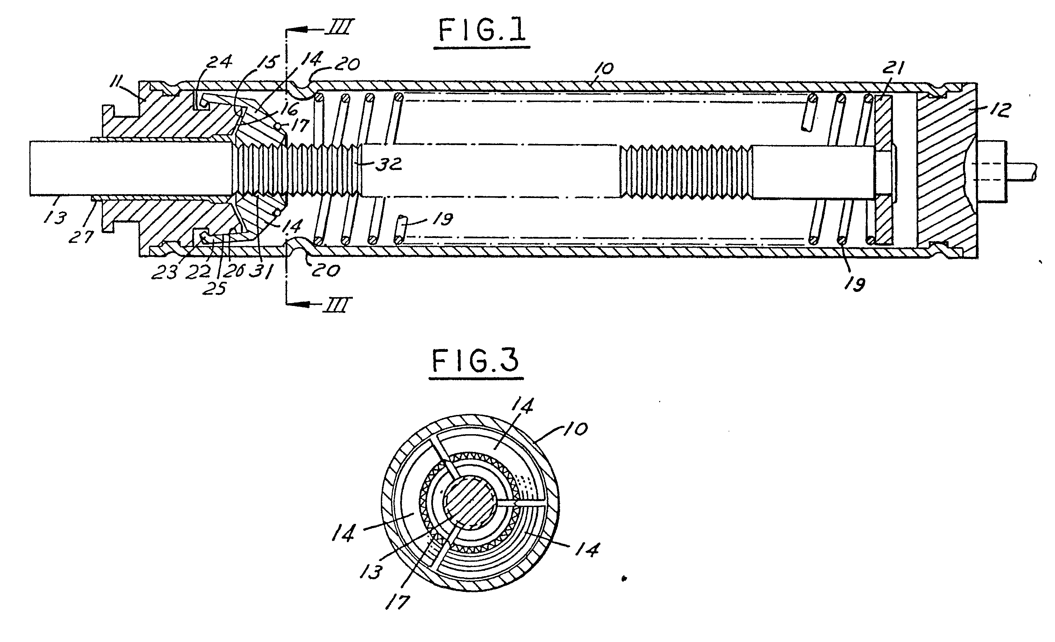

Clutch means releasably connecting the tubular housing 10 and the rod 13 include three collet members 14 positioned around the rod 13 on a raised shoulder 11a of the end insert 11. Each collet member 14 is formed with a first, external, part frusto-conical face 15 adapted to engage an internal part frusto-conical surface 16 on the axially inner end of the raised shoulder 11a of the end insert 11, the surface 16 being relieved with a radial edge face 37 and having a greater internal cone angle than the faces 15 of the collet members. A circumferential retaining spring 17 extends circumferentially in aligned grooves 18 in each collet member 14 resiliently to urge the collet members 14 radially inwardly into contact with the termination member 13. A helical spring 19 interposed between an abutment or shoulder 20 on the end insert 11 and a disc 21 fixed on the end of the termination member rod 13 resiliently urges the termination member rod 13 axially inwardly of the housing 10 and to the right as seen in Figure 1. Each collet member 14 is formed with an axially extending arm or flange 22 having an inwardly directed lip 23 pivotably engaging, whilst permitting axial movement, in a circumferential groove 24 at the axially outer part of the raised shoulder 11a, the lip 23 having a lesser axial dimension than the width of the groove 24. Inner faces 25 on the flanges conform to a frusto-conical surface 26 on the raised shoulder 11a. The radially inner faces of body portions of the collet members 14 and a portion of the rod 13 are circumferentially grooved to form axially spaced, co-acting, $90°$ triangular profile, serrations 31, 32.

An axially movable release tube 27 extending through the end insert 11 around the termination member rod 13 has an enlarged inner end 28 engaging a shoulder 29 on the end insert 11 to retain the tube 27 against axially outward movement and is formed at a forward end with an external, frusto-conical surface 33. Complementary, second, internal, part frusto-conical surfaces 30 are formed on the collet members 14.

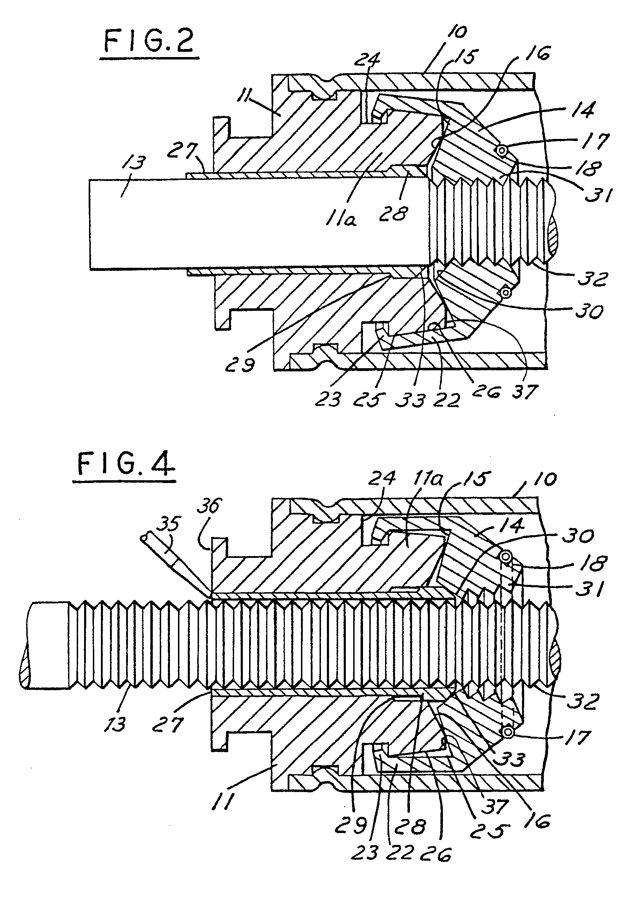

In operation, to install the device into a cable run, as shown in Figure 4, a tool 35 is utilised to move the release tube 27 inwardly of the tubular housing (that is, to the right in Figure 4) such that the frusto-conical surface 33 contacts the internal part frusto-conical faces 30 on the collet members 14 and, with further movement, urges the collet members to pivot on the lips 23 thereby moving the serrations 31 out of engagement with the serrations 32. Tension is then applied to the rod 13 and the tubular housing 10 across the first and second anchorages to withdraw the rod 13 axially from the housing to an extended position and thereby compress the helical spring 19. With the rod 13 at the extended position and the requisite extent of compression having been applied to the spring 19, a clip (not shown) is engaged with the serrations 32 to butt against a face 36 of the insert 11. The device is then connected into the slack cable run at the first and second anchorages on the insert 12 in the tubular housing 10 and the rod 13. Having effected attachment, the clip is removed whereupon the resilience of the helical spring 19 urges retraction of the rod 13 axially into the housing 10 and applies tension to the cable run. Upon the helical spring 19 reaching an extension commensurate with the tension in the cable run, at an intermediate position of retraction of the rod 13 into the tubular housing 10, the resilience of the circumferential retaining spring 17 is such as to overcome the radial component of the force across the serrations 31, 32 and urge the collect members 14 radially inwardly to bring the serrations into engagement whilst moving the release tube 27 axially outwardly, thereby restraining axial movement between the tubular housing 10 and the rod 13. If, during use, the tension in the cable run falls belov the force exerted by the helical spring 19 to an extent that the radial component of the force across the serrations 31, 32 is sufficient to exceed the force exerted by the circumferential retaining spring 17, the rod 13 being at an intermediate position of retraction, the collet members 14 are urged to pivot radially outwardly about the lips 23 so that the respective serrations 31, 32 ratchet to a new relative axial position to restore the balance of forces by adjusting the effective length of the cable run within the limits imposed by the length of the tubular housing 10, whereupon the serrations re-engage.

Upon applying further tension to the cable run to effect actuation of the actuated member, the rod 13 moves a short distance axially outwardly from the tubular housing 10 such that the external part frusto-conical faces 15 of the collet members 14 contact the internal frusto-conical surface 16 of the raised shoulder 11a to urge the serrations 31 into engagement with the serrations 32 and thereby effect transmission of the actuating tension. The inwardly directed lips 23 having a lesser axial dimension than the circumferential groove 24 accommodates the slight relative movement between the collet members 14 and the end insert 11a. The slight disparity between the cone angles of the surface 16 and the faces 15 assists in biasing the collet members radially inwardly, since the line contact between the faces and the intersection of the surface 15 with the relieved edge face 37 tends to produce a radially inwardly directed turning moment upon the portions of the collet members adjacent the serrations 31.

It will be appreciated that alternatively the serrations may be formed as a helical screw thread rather than axially spaced circumferential grooves. With such an arrangement, the release tube 27 may be omitted if desired since the rod 13 may be retracted from the housing 10 by applying tension across the first and second anchorages and rotating the rod relative to the housing so that the rod moves outwardly by the effect of the screw threaded form of the serrations. A removable clip is applied to the rod in the extended position to prevent return of the rod into the housing during connection of the device into a cable run.

It will further be appreciated that whilst the foregoing description envisages the device being connected into a run of core cable, preferably at one end thereof, the device is readily modified to be connected into a run of conduit of a control cable. In such an arrangement the core cable extends centrally through the device and the conduit is connected into the end insert 12 and the rod 13, which are made hollow to accommodate the core cable. Alternatively, the conduit in the form of a tightly wound wire spiral, may be substituted for the rod provided strength considerations allow.

## Claims

1. A control cable adjuster device including a tubular housing (10) having at one end a first anchorage (12) connectable into a cable run and at the other end locating means (11) for a termination member (13) movably extending co-axially of the tubular housing (10) between a position fully retracted into, and a position fully extended from, the tubular housing, first resilient means (19) biasing the termination member toward the position fully retracted into the tubular housing, the termination member (13) being formed on the surface thereof with circumferential serrations (32) engageable with collet members (14) and, on the end thereof remote from the tubular housing, a second anchorage connectable into the cable run, the collet members (14) each having a body portion formed on radially inner faces with serrations (31) adapted to co-act with the serrations (32) on the termination member (13), an internal frusto-conical surface (16) connected to the housing being arranged to co-act with first, external part frusto-conical, surfaces (15) on the collet members (14) such that relative axial movement of the collet members (14) in a direction axially outwardly of the tubular housing (10) urges the collet members (14) radially inwardly and thereby urges the serrations (31) on the collet members into engagement with the serrations (32) on the termination member (13), characterised in that the said internal frusto-conical surface (16) is arranged on the locating means (11) which is attached to the tubular housing (10) and in that the body portion of each collet member (14) has, extending axially from the body portion, an arm (22) having an end portion (23) located on the locating means (11) for pivoting through a restricted are on an axis generally tangential to the locating means (11) and for restricted axial movement relative to the locating means (11), with second resilient means (17) biasing the collet members (14) radially inwardly.

2. A control cable adjuster device as claimed in Claim 1, characterised in that the end portion of each collet member (14) includes an inwardly directed lip (23) adapted to be located, whilst permitting restricted axial movement, in a circumferential groove (24) in the locating means (11).

3. A control cable adjuster device as claimed in Claim 1 or 2, characterised in that the cone angle of the internal frusto-conical surface (16) in the locating means (11) is slightly less than the cone angle of the first, external, part frusto-conical surfaces (15) on the collet members (14).

4. A control cable adjuster device as claimed in any preceding claim, characterised in that the second resilient means (17) include a circumferential spring positioned in aligned circumferentially extending grooves (18) in radially outer faces of the collet members (14).

5. A control cable adjuster device as claimed in any preceding claim, characterised in that the serrations (31,32) are formed as axially spaced circumferential grooves of 90° triangular profile.

6. A control cable adjuster device as claimed in any preceding claim, characterised in that the serrations are formed as helical screw threads.

7. A control cable adjuster device as claimed in any preceding claim, characterised in that a release tube (27) extends co-axially of and adjacent the termination member (13), through the locating means (11) and, at the axially inner end, is formed with an external frusto-conical surface (33) arranged to co-act with second internal part frusto-conical surfaces (30) on the collet members (14) such that relative movement of the release tube (27) axially inwardly urges the collet members (14) radially outwardly.

8. A control cable adjuster device as claimed in Claim 7, characterised in that the release tube (27) is formed at the axially inner end with an enlarged head (28) arranged to be seatable in a counter-bore (29) in the locating means (11).

9. A control cable adjuster device as claimed in any preceding claim, characterised in that the first resilient means (19) include a helical spring extending between a seating (20) on the locating means (11) and a collar (21) attached to the termination member at an end portion located within the tubular housing (10).

**Revendications**

1. Mécanisme de réglage pour commande par câble comprenant un boîtier tubulaire (10) comportant à une extrémité un premier ancrage (12) pouvant être relié dans une longueur de câble et à l'autre extrémité un moyen de positionnement (11) pour un organe d'entretoisement (13) mobile se projetant dans le même axe que le boîtier tubulaire (10) entre une position complètement rétractée dans le boîtier tubulaire, et une position complètement déployée à partir du boîtier tubulaire, un premier moyen élastique (19) sollicitant l'organe d'entretoisement vers la position complètement rétractée dans le boîtier tubulaire, l'organe d'entretoisement (13) étant doté sur sa surface de crans circonférentiels (32) pouvant être engagés avec des douilles de serrage (14) et, sur son extrémité éloignée du boîtier tubulaire, un second ancrage pouvant être relié dans la longueur du câble, les douilles de serrage (14) comportant chacune un corps doté sur les faces internes radialement de crans (31) adaptés à coopérer avec les crans (32) sur l'organe d'entretoisement (13), une surface tronconique interne (16) reliée au boîtier étant agencée

pour ccopérer avec les premières surfaces externes (15), en partie tronconiques, sur les douilles de serrage (14) de sorte que le déplacement axial relatif des douilles de serrage (14) dans un sens axialement vers l'extérieur du boîtier tubulaire (10) sollicite les douilles de serrage (14) radialement vers l'intérieur et donc force les crans (31) sur les douilles de serrage en engagement avec les crans (32) sur l'organe d'entretoisement (13), caractérisé en ce que ladite surface tronconique interne (16) est disposée sur le moyen de positionnement (11) qui est fixé au boîtier tubulaire (10), et en ce que le corps de chaque douille de serrage (14) comporte, s'étendant axialement à partir du corps, un bras (22) doté d'une portion d'extrémité (23) située sur le moyen de positionnement (11) pour un pivotement sur un arc restreint selon un axe généralement tangentiel au moyen de positionnement (11) et pour un déplacement axial restreint relativement au moyen de positionnement (11), avec un second moyen élastique (17) sollicitant les douilles de serrage (14) radialement vers l'intérieur.

2. Mécanisme de réglage pour commande par câble selon la revendication 1, caractérisé en ce que la portion d'extré-mité de chaque douille de serrage (14) comprend une projection dirigée vers l'intérieur (23) adaptée à être placée, tout en permettant un déplacement axial restreint, dans une gorge circonférentielle (24) dans le moyen de positionnement (11).

3. Mécanisme de réglage pour commande par câble selon la revendication 1 ou 2, caractérisé en ce que l'angle conique de la surface tronconique interne (16) dans le moyen de positionnement (11) est légèrement inférieur à l'angle conique des premières surfaces en partie tronconiques, externes (15), sur les douilles de serrage (14).

4. Mécanisme de réglage pour commande par câble selon l'une quelconque des revendications précédentes, caractérisé en ce que le second moyen élastique (17) comprend un ressort circonférentiel positionné dans les gorges alignées s'étendant circonférentiellement (18) dans les faces externes radialement des douilles de serrage (14).

5. Mécanisme de réglage pour commande par câble selon l'une quelconque des revendications précédentes, caractérisé en ce que les crans (31,32) sont formés en tant que gorges circonférentielles axialement espacées de profil triangulaire de 90°.

6. Mécanisme de réglage pour commande par câble selon l'une quelconque des revendications précédentes, caractérisé en ce que les crans sont formés en tant que pas de vis hélicoïdaux.

7. Mécanisme de réglage pour commande par câble selon l'une quelconque des revendications précédentes, caractérisé en ce que un tube de dégagement (27) s'étend coaxialement et adjacent à l'organe d'entretoisement (13), dans le moyen de positionnement (11) et, à l'extrémité interne axialement, est doté d'une surface tronconique externe (33) agencée pour coopérer avec les secondes surfaces internes en partie tronconiques (30) sur les douilles de serrage (14) de sorte que le déplacement relatif du tube de dégagement (27) axialement vers l'intérieur force les douilles de serrage (14) radialement vers l'extérieur.

8. Mécanisme de réglage pour commande par câble selon la revendication 7, caractérisé en ce que le tube de dégagement (27) est doté à l'extrémité interne axialement d'une tête agrandie (28) agencée pour pouvoir reposer dans un logement cylindrique (29) dans le moyen de positionnement (11).

9. Mécanisme de réglage pour commande par câble selon l'une quelconque des revendications précédentes, caractérisé en ce que le premier moyen élastique (19) comprend un ressort hélicoïdal s'étendant entre un logement (20) sur le moyen de positionnement (11) et un disque (21) fixé à l'organe d'entretoisement à une portion d'extrémité située au sein du boîtier tubulaire (10).

**Ansprüche**

1. Betätigungsseil-Einstelleinrichtung mit folgenden Merkmalen:
   ein rohrförmiges Gehäuse (10) weist an einem Ende eine erste, in einen Seilverlauf einfügbare Verankerungseinrichtung (12) und an dem anderen Ende eine Festlegeinrichtung (11) für ein Abschlußteil (13) auf, das sich koaxial zu dem Rohrgehäuse (10) erstreckt und zwischen einer vollständig in das Rohrgehäuse zurückgezogenen Stellung und einer vollständig aus diesem vorstehenden Stellung bewegbar ist; erste elastische Mittel (19) drängen das Abschlußteil in die vollständig in das Rohrgehäuse zurückgezogene Stellung; das Abschlußteil (13) weist auf seiner Oberfläche um den Umfang umlaufende Wellungen (32) auf, die in Spannzangenglieder (14) eingreifen, ferner an seinem vom rohrförmigen Gehäuse abgewandten Ende eine zweite, in den Seilverlauf einfügbare Verankerungseinrichtung auf; jedes der Spannzangenglieder (14) weist einen Körperbereich mit auf der radialen Innenseite angeordneten Wellungen (31) sind, die so angepaßt sind, daß sie mit den Wellungen (32) auf dem Abschlußteil (13) zusammenwirken; eine innere, kegelstumpfförmige, mit dem Gehäuse verbundene und derart angeordnete Oberfläche (16), daß sie mit ersten äußeren, teilweise kegelstumpfförmige Oberflächen (15) auf den Spannzangengliedern (14) zusammenwirkt, so daß eine relative axiale Bewegung der Spannzangenglieder (14) in eine Richtung axial aus dem Rohrgehäuse (10) heraus die Spannzangenglieder (14) radial einwärts drückt und hierbei die Wellungen (31) der Spannzangenglieder in Kontakt mit den Wellungen (32) des Abschlußteils (13) drückt,
dadurch gekennzeichnet,
daß die innere, kegelstumpfförmige Oberfläche (16) auf der Festlegeinrichtung (11) angeordnet ist, die an dem rohrförmigen Gehäuse (10) befestigt ist,
daß der Körperbereich jedes Spannzangenglieds (14) einen sich axial von dem Körperbereich erstreckenden Arm (22) mit einem Endbereich (23) aufweist, der an der Festlegeinrichtung (11) angeordnet ist, um auf einem beschränkten Bogen um eine im wesentlichen tangential zu der Festlegeinrichtung (11) angeordneten Achse zu schwenken und um eine beschränkte axiale Bewegung relativ zu der Festlegeinrichtung (11) zu ermöglichen, und daß zweite elastiche Mittel (17) die Spannzangenglieder (14) radial einwärts vorspannen.

2. Betätigungsseil-Einstelleinrichtung gemäß Anspruch 1, dadurch gekennzeichnet, daß der Endbereich jedes Spannzangengliedes (14) eine einwärts gerichtete Lippe (23) aufweist, die zur Festlegung in eine Umfangsnut (24) in der Festlegeinrichtung (11) bei beschränkter axialer Bewegung angepaßt ist.

3. Betätigungsseil-Einstelleinrichtung gemäß Anspruch 1 oder 2, dadurch gekennzeichnet, daß der Kegelwinkel der inneren, kegelstumpfförmigen Oberfläche (16) der Festlegeinrichtung (11) etwas kleiner als der Kegelwinkel der ersten äußeren, teilweise kegelstumpfförmigen Oberfläche (15) der Spannzangenglieder (14) ist.

4. Betätigungsseil-Einstelleinrichtung gemäß einem der vorhergehenden Ansprüche, dadurch gekennzeichnet, daß das zweite elastische Mittel (17) eine Ringfeder umfaßt, die in ausgerichteten, sich um den Umfang erstreckenden Nuten (18) auf den radialen Außenseiten der Spannzangenglieder (14) angeordnet ist.

5. Betätigungsseil-Einstelleinrichtung gemäß einem der vorhergehenen Ansprüche, dadurch gekennzeichnet, daß die Wellungen (31,32) als in Längsrichtung in einem bestimmten Abstand zueinander an dem Umfang umlaufende Nuten mit einem 90° -Dreieckprofil ausgebildet sind.

6. Betätigungsseil-Einstelleinrichtung gemäß euben der vorhergehenen Ansprüche, dadurch gekennzeichnet, daß die Wellungen als Schraubengewinde ausgebildet sind.

7. Betätigungsseil-Einstelleinrichtung gemäß einem der vorhergehenden Ansprüche, dadurch gekennzeichnet, daß ein Rohr (27) zum Lösen der Spannzange sich koaxial zum Abschlußteil (13) in dessen unmittelbarer Nähe durch die Festlegeinrichtung (11) erstreckt und an dem azial inneren Ende eine äußere, kegelstumpfförmige, derart angeordnete oberfläche (33) aufweist, daß zweiten inneren, teilweise kegelstumpfförmigen Oberflächen (30) auf den Spannzangengliedern (14) zusammenwirkt, so daß eine in Längsrichtung nach innen gerichtete, relative Bewegung des Rohres (27) zum Lösen der Spannzange die Spannzangenglieder (14) in radialer Richtung auswärts drängt.

8. Betätigungsseil-Einstelleinrichtung gemäß Anspruch 7, dadurch gekennzeichnet, daß das Rohr (27) zum Lösen der Spannzange an dem in azialer Richtung inneren Ende einen verbreiterten Kopf (28) aufweist, der zur Lagerung in einer Stufenbohrung (29) der Festlegeinrichtung (11) ausgebildet ist.

9. Betätigungsseil-Einstelleinrichtung gemäß einem der vorhergehenen Ansprüche, dadurch gekennzeichnet, daß die ersten elastischen Mittel (19) eine Schraubenfeder aufweisen, die sich zwischen einem Sitz (20) an der Festlegeinrichtung (11) und einer Ringscheibe (21) erstreckt, die an dem Endbereich des Abschlußteils befestigt ist, der innerhalb des rohrförmigen Gehäuses (10) angeordnet ist.

FIG.1

FIG.3

EP 0 267 685 B1

FIG.2

FIG.4